# EUROPEAN PATENT APPLICATION

(11) **EP 2 022 714 A1**
(43) Date of publication of application: **11.02.2009**
(21) Application number: 08156045.0
(22) Date of filing: 12.05.2008
(51) Int. Cl.: B63B 59/08, A01K 61/00, E04H 4/16

(54) **Integral submarine maintenance system**

(30) Priority: 11.05.2007 CL 200701364
(71) Applicant: Geraldo Seura, Rodrigo Andrés, La Serena (Región de Coquimbo) (CL)
(72) Inventor: Geraldo Seura, Rodrigo Andrés, La Serena (Región de Coquimbo) (CL)
(74) Representative: Gerbino, Angelo

(57) **Abstract**

The integral submarine maintenance system operates by means of a simultaneous removing, vacuuming and filtering effect, generated by a removing device connected to a vacuum device, which is connected to a storage and filtering device. The system is used to clean organic pollution that adheres to the substrate of submerged culture systems and/or structures and/or ships and/or equipment both in marine and in fresh water.

## Description

### Technical field

The present technology relates to an integral submarine maintenance system that operates by means of a simultaneous removing, vacuuming and filtering effect, generated by a removing device connected to a vacuum device, said vacuum device being connected to a storage and filtering device, said system being used to clean organic pollution that adheres to the substrate of submerged culture systems and/or structures and/or ships and/or equipment both in marine and in fresh water. Such maintenance allows carrying out an *in situ* cleaning of the submerged culture systems and/or structures and/or ships and/or submerged equipment, with no need to move them, which brings about benefits in terms of operational costs, less death and stress rates and environmental control of the organic pollution, with the subsequent approval of the environmental laws in force. The aforementioned brings about the generation of a cleaning procedure and furthermore an installation procedure for such system.

### Background of the invention

Organic pollution or "biofouling" or "bioincrustation" is a problem presently affecting all submerged structures and aquatic systems along the entire world. Biofouling is produced by organisms that adhere to any substrate contributed either by the aquatic environment or by structures not belonging to such environment, such as culture nets, ship hulls, submarine equipment, etc. When these organisms start to adhere to surfaces, they start growing to cause a variety of problems such as, in the case of marine cultures, the total obstruction of nutrient and oxygen-rich water flow to the growing species, with a subsequent weight gain of the system, thus causing production problems such as low yields in smoltification and harvesting periods, operational costs associated to the lower cargo capacity of the ships due to the culture system weight and the number of trips that the ships have to do. Costs associated to system repairs once such systems are removed from the water and bad accomplishment of the environmental regulations, are also relevant factors, and the most important of which is direct mortality of the cultured species inside these culture systems. In the case of submerged structures and/or ships and/or equipments, the problem happens in the same way, since being those fixed substrates, rapid growth of the different biofouling factors in water can occur. In the case of submerged structures and/or ships and/or equipments, the issue is more complicated, because biofouling tends to corrode exposed walls and thus impairs their useful lives, and furthermore imparts more weight to them and decreases maneuverability. For instance, a colonized ship has higher movement resistance in the water due to higher friction caused by the organism layer. In fact, a one-tenth of millimeter layer can increase friction up to 15% in relation to a clean ship. This translates into increased fuel costs, which can be even increased up to 30%. Considering the size of modem ships and the amount of ships in the world, only this motif is enough to justify the concern about biofouling prevention.

The technology used to develop marine cultures is mainly based in culture cages, which generate structures having different geometrical configurations, such as circular, rectangular, pyramidal or flat nets. For instance, in the case of Chilean Northern Scallop, the culture procedure starts from the seed, which is inserted into a low-granulometry cage to prevent it to flee. Along the growth process, higher granulometry nets are used, which allow a higher circulating water flow between them. Finally, this bivalve reaches its commercial size and is harvested to be subsequently commercialized.

In the case of fish culture, e.g. salmon culture, the process is carried out in two phases. The first is the hatchery stage, where the species growth is carried out in land culture tanks. This first stage lasts until the fish reaches a size that allows smoltification into submerged nets. The second stage is the growth stage, when the culture is carried out in nets supported by floating structures, wherein growth continues up to commercial size.

The problem appears in culture systems when biofouling adheres to the nets, being those submerged systems subject to the aforementioned problems.

In the case of submerged structures, ships and equipments, the growth of biofouling is similar, because those are fixed and permanent substrates and thus biofouling adheres and grows generating those problems cited before.

To solve this problem, some systems have been developed that allow accomplishing the goal of cleaning submerged structures. An example is shown in the US Patent No. 6,279,187, entitled "Shellfish predator screen cleaner", granted to Herington, which discloses a system to clean protective nets against mollusk predators. This system has a rectangular PVC frame onto which gears are coupled that drive a nylon rotary brush by means of an electric motor. Said brush detaches biofouling from the protective nets.

Another example is given by US Patent No. 5,791,291, entitled "Method and apparatus for cleaning fish screens", granted to Strong, which discloses an apparatus and method to continuously clean fish protective screens. This device allows cleaning fish culture protecting screens with a float that is cyclically filled with water and emptied by air injection from a compressor. Said cycling allows the float to go down and up from bottom to top, sliding along a rail and allowing a set of brushes in the float to be in continuous contact with the surface to be cleaned.

Japanese Patent No. 8,332,994, entitled "Underwater Robot Pressing Reaction Generating Device", granted to Tominaga, discloses a sub-aquatic robot driven by a motor supplied with a fuel tank, which cleans aquatic nets by means of the propulsion of a fluid obtained from the environment. This fluid drives a rotating brush that causes a removal effect.

Chilean Patent Application No. 3,001, filed in 2006 by Cheul and Goyeneche, describes a cleaning system for aquaculture nets designed to extract algae and incrustations adhering to them. The equipment operates by means of a vacuum device. This vacuum device has a submerged pump that sucks up said biofouling with the aid of a Venturi tube. The discharge of this pump and the Venturi tube is sent directly into a cart that has a filter screen.

This last patent application only shares the essential idea with the present invention, but does not solve completely and adequately the problem. The same is true for the other documents mentioned, which accomplish some of the functions but only in a limited way.

For this reason, they are not considered as an efficient and integral system for submarine maintenance, since they lack factors that allow accomplishing the goal of efficiently removing, suctioning and filtering in each of the stages, simultaneously minimizing the environmental damage and impact. Furthermore, besides of cleaning, in the case of living species, the removal function has also the goal of decreasing the high stress rates to which cultured species are subject, as well as minimizing the environmental impact by using a filter with various stages that allows regulating the content of particles evacuated into the operation medium.

Moreover, it is worth to mention that existent systems up to date are not universal and therefore are only applicable to certain and determined culture systems to which they were designed for.

In view of the previous discussion, it is very relevant to have an efficient and integral procedure and system to give preventive maintenance with the aim of minimizing the aforementioned problems.

Accordingly, an object of the present invention is to provide an integral submarine cleaning system that allows removing, suctioning and separating settleable and suspendable solids from the effluent obtained by the operation.

Another object of the present invention is to provide a submarine cleaning system that is universally adaptable to every submerged culture system and/or structure and/or ship and/or submerged equipment.

Another object of the present invention besides preventing biofouling growth is to control the environmental impact caused by cleaning, i.e. by controlling the total amount of settleable and suspendable particles returned into the water where the operation is performed.

### Description of the invention

To accomplish the aforementioned objects, as well as other objects of the present invention, the integral submarine maintenance system is composed by three devices acting together.

The first device is a removal device that allows detaching organic pollution from submerged culture systems and/or structures, ships or submerged equipment. The element that causes the detaching action is a removing brush.

The removing brush is a fundamental removal element that is interchangeable with brushes having different geometric configurations, due to the configuration of the removing device, and therefore can take a cylindrical shape for a flat surface and/or cylindrical with a circular carving through the longitudinal axis of the brush for cylindrical surfaces and/or regular shapes and/or irregular shapes that allow applying said brushes to different types of surfaces or geometric shapes such as flat and/or non-flat and/or regular and/or irregular and/or curve and/or non-curve shapes.

The brush comprises a solid mass generated by a solid diameter. The material of said brush can be plastic and/or metal and/or rubber and/or wood and/or polymeric. Said mass forms the brush body, which shapes the brush to be adapted to different work surfaces as mentioned hereinbefore. Onto this mass the materials that generate the removal effect are attached. These materials are placed along the brush periphery and inserted into the solid mass, up to a second diameter or attack diameter. This diameter varies according to the constitution type of removing materials and/or the rotation speed and/or the torque and/or the type of organic pollution to be detached. The magnitude of this diameter is obtained experimentally. The shape of the removing materials can be fibers and/or bristles and/or points and/or grinders and/or plates radially placed along the removing brush. The removing material may comprise plastic and/or metal and/or rubber and/or wood and/or polymer. These fibers and/or bristles and/or points and/or grinders and/or plates can be placed on the entire brush length as well as on certain portions of said brush and at certain distances both from the center and from the lateral edges of the brush. Furthermore, their respective lengths, thicknesses and diameters are function of the torque and/or rotation speed and/or organic pollution to be detached, and therefore they can have any magnitude that is within limits that are reasonable to the system's function.

In the geometric configuration of the brush, the removing materials are distributed in such a way as to generate the removal effect according to the relevant work conditions and/or the type of organic pollution. Accordingly, the fibers and/or bristles and/or points and/or grinders and/or plates along the removing brush, made from the aforementioned materials, can be distributed in the following ways: fibers and/or bristles and/or points and/or grinders can be placed radially along the brush on a continuous and/or a discontinuous line. This line can be simple radial, i.e. a single line along the brush, and/or multiple radial, i.e. multiple lines at different degrees. The longitudinal and degree spacing can be experimentally determined, according to the different types of organic pollution, rotating speed and/or torque. Furthermore, those removing materials can be distributed helicoidally along the brush, either on a single helix or on multiple helixes at different degrees and different helix steps, with steps as long as the brush length or varying according to some proportion in relation to the brush. Regarding plates, these can be placed in a simple radial disposition, i.e. a line along the brush, in a continuous and/or discontinuous way, and/or multiple radial, i.e. multiple lines at different degrees. The longitudinal and degree spacing between plates can be experimentally determined, according to the different types of organic pollution, rotating speed and/or torque. Furthermore, these plates can be distributed helicoidally along the brush, either on a single helix or on multiple helixes at different degrees and different helix steps, with steps as long as the brush length or varying according to some proportion in relation to the brush. Furthermore, fibers and/or bristles and/or points and/or grinders can be mixed with plates and these latter can be mixed themselves, placed radially according to the required condition, either as single or composite elements, continuously or discontinuously, with different degrees and longitudinal and radial spacing between them.

Moreover, in the case of a helix disposition of fibers and/or bristles and/or points and/or grinders and/or plates, the helix can start from the right or from the left end of the brush, thus generating a movement sense. These helixes can also start at both sides with the same and/or different steps, thus generating convergence of the helixes and/or the same helixes can start from the center of the removing brush, thus generating divergence of the helixes. Said single-sense, convergent and/or divergent helixes can have steps with magnitudes equivalent to portions of the brush, therefore describing many turns around the helix, as well as a magnitude that is equivalent to the length of the removing brush.

This brush is driven by a connection element between the driving element and/or an extended shaft of the driving element and the removing brush. This element can be a universal movement transmission joint, which allows placing the driving element at different degrees and positions, with the aim of assuring a correct placement in the removing element. Moreover, the connection between the connection element and the driving equipment can be effected by means of gears that allow regulating the speed and torque required by the brush. The connection can be also connected directly in-line with the driving element by means of a cotter or fixed connection element such as a line coupling that maintains the revolution number.

This element is coupled to a shaft extending from the driving element or to the same shaft of the driving element. The other end is affixed onto the shaft that supports and couples the removing brush, which is supported in turn on a supporting element that can be plastic and/or metallic and/or stainless steel bearings inserted into an oil-filled staunch carcass.

The driving equipment determines the torque and speed of the brush. The movement from the driving equipment can be supplied by three different means.

Mean No. 1 is the use of a 12 or 24-Volt electric motor, or an electric motor operating at the required voltage. The motor is inserted into a staunch carcass that seals said motor from the aquatic environment. The motor shaft generally has a cotter or a wedge to affix a movement transmission element thereto, such as an extension shaft and/or a gear. The motor shaft is connected to a shaft extension made of stainless steels and/or plastic and/or rubber. The motor is inserted inside the staunch carcass, which seals it for its correct functioning. This staunch carcass is made of plastic and/or metal. The staunch carcass comprises 5 main parts: sealing chamber, motor lid, carcass body, top lid and electric connection lid. The first of those parts accommodates a retainer or sealing element for the extension element that passes through the opening sealed by the retainer, which allows the passage of the shaft extension to the aquatic environment. Furthermore, there is a supporting element for the extension shaft, either a plastic and/or metal bushing or a stainless steel bearing, and oil and/or grease that prevents water entrance caused by the movement of the motor shaft. Between the chamber and the motor lid, a sealing element is used, which can be an o-ring or a gasket to prevent fluid leakage. The second part or motor lid is basically a chamber that accommodates a plastic and/or metal support, which function is to support another retain that seals the opening through which the shaft extension passes out and seals out oil and/or grease passage from passing into the motor, also placing the motor in a centered position to the carcass body. This lid is affixed onto the motor by means of bolts that are attached to the motor lid and that are generally included with the motor. The third part is the carcass body, which is basically the place where the motor body is accommodated. Between the motor lid and the carcass body, a sealing element is used, which can be an o-ring or a gasket to prevent fluid leakage. The fourth part is a top lid, which has the function of connecting the motor terminals that are inserted in the carcass body. Between the carcass body and the top lid, a sealing element is used, which can be an o-ring or a gasket to prevent fluid leakage. Finally, the fifth part is the electric connection lid, wherein the electric connector in located, which prevents the passage of electric current from the surface into depth waters. Between the top lid and the electric connection lid, a sealing element is used, which can be an o-ring or a gasket to prevent fluid leakage. The five parts of the staunch carcass are joined by bolts, rings and nuts separated by 30 degrees with respect to the central axis in such a way as to increase the resistance to the static water pressure. These parts can also be joined by their own elements, but threaded by means of a sealing gasket. Pressure clamps can also be used with the same goal, which act in concordance with a gasket to seal the carcass. Therefore, the extended shaft is sealed and it is possible to transfer movement to the connection element and subsequently to the removing brush. It is worth to mention that the shaft that goes out to the aquatic environment can be the same motor shaft, but this is not recommendable due to corrosion.

The removing brush can act together with two in-line motors, which supply potency at each side, both of them having the configuration previously described. It is worth to mention that the motors must fulfill the same technical specifications in such a way as to not having rotation phase differences at both sides of the brush. The electric connection is made by wiring from the surface by means of submarine connectors, which prevent electricity to contact water. The energy required for motor driving and function is supplied by 12 Volt batteries, and batteries can be connected in series to obtain the required voltage (24, 36 and subsequently so) if required. The battery capacity is determined by the motor consumption, which in this case have been taken as 12 Ampere-Hour (Amph), changeable as needed according to the motor requirements at 30, 40, 50 Amph and subsequently so. This energy can also be supplied by a generator or other equipment that supplies electric energy from solar energy by means of a solar panel, from wind energy by means of an air generator or from a turbine driven by compressible and/or incompressible fluids, which supplies energy to a generator, or by any other electric energy generating equipment.

Mean No. 2 is the generation of driving motion through pneumatic energy by using an air turbine to generate the rotation of the removing brush. Air is injected through a high-pressure hose. High-pressure air is produced by a compressor, which can be driven directly by an internal combustion engine or an electric motor, with electric energy obtained from the network or from a generator, or from any other device that generates electric energy. The high-pressure hose is connected to a nipple that is inserted into a staunch carcass. A strangling valve is located upstream the nipple, which allows decreasing or increasing the air flow required to drive the removing brush. A small vessel is located between the strangling valve and the nipple, which contains oil that is sucked up by a Venturi tube, the suction being produced by the passage of air through said Venturi tube. The oil is sucked up and lubricates the turbine-rotor ensemble. The main element of movement generation is a turbine, which is a simple paddle turbine. This turbine comprises a central body having radially located paddles along its periphery, whereupon air strikes and thus generates the movement. The number of said paddles varies according to the required air flow, rotating speed and torque. The turbine shaft can have a length enough to enter the sealing chamber and go out to eh aquatic environment, or it can have a shaft extension coupled to the turbine shaft by means of a cotter, a wedge and/or an in-line coupling and/or any kind of gear. This element is accommodated inside the staunch carcass. The staunch carcass has three main parts: sealing chamber, body lid and body. Two retains are located inside the sealing chamber, through which the extension shaft and/or the turbine shaft passes. Furthermore, the sealing chamber has a supporting element for the extension shaft and/or turbine shaft, either a plastic and/or metal bushing and/or a stainless steel bearing. Lubricating substances as oil and/or grease are included inside this sealing chamber. Between the sealing chamber and the body lid, a sealing element is used, which can be an o-ring or a gasket to prevent fluid leakage. The body lid is a structure that together with the body seals and centers the movement of the turbine. Between the body lid and the body, a sealing element is used, which can be an o-ring or a gasket to prevent fluid leakage. The air coming from the compressor through the high-pressure hose, impacts against the turbine and is subsequently evacuated through an outlet hose to the exterior, which can exit directly from the carcass as well as pass through the sealing chamber and exit to the aquatic environment. This evacuated air is used to generate a drag-suction effect, i.e. the evacuated flow is directed toward the suction section of the removing device to generate suction. The three parts of the staunch carcass are joined by bolts, rings and nuts separated by 30 degrees with respect to the central axis in such a way as to increase the resistance to the static water pressure. These parts can also be joined by their own elements, but threaded by means of a sealing gasket. Pressure clamps can also be used with the same goal, which act in concordance with a gasket to seal the carcass. Therefore, the extended turbine shaft and/or extended turbine shaft is sealed and it is possible to transfer movement to the connection element and subsequently to the removing brush.

The removing brush can act together with two in-line turbines, which supply potency at each side, both of them having the configuration previously described. Therefore, the flow from the compressor bifurcates and generates rotation and thus potency delivery to both sides of the removing brush.

Mean No. 3 is the generation of driving motion through hydraulic energy by using a water turbine to generate the rotation of the removing brush. High-pressure water from the operation medium is injected by a pump, which can be driven directly by an internal combustion engine or an electric motor, with electric energy obtained from a generator or from the network, or from any other device that generates electric energy.

A high-pressure hose is connected to the pump outlet. The other end of the hose is connected to the carcass wherein the turbine is accommodated, by means of a quick coupling. The fluid supplied by the driving equipment impacts the paddles of a turbine, which rotates and transfers movement to the removing brush. The carcass is not staunch, since the driving fluid is water in this case. The turbine shaft is supported on plastic and/or metal and/or rubber and/or stainless steel bearings. These bearings are inserted in staunch carcasses filled with oils and sealed by retains that keep said elements not corroded by water. The water that impacts turbine paddles is evacuated through the carcass to the aquatic environment. In this case, the carcass basically comprises two parts: the body and the body lid. Between the body and the body lid, a sealing element is used, which can be an o-ring or a gasket to prevent fluid leakage. These together are the supporting elements that center the movement of the turbine. The two parts of the carcass are joined by bolts, rings, washers and nuts, with 30-degrees separation between them with respect to the central axis. These parts can also be joined by their own elements, but threaded by means of a sealing gasket. Pressure clamps can also be used with the same goal, which act in concordance with a gasket to seal the carcass. Therefore, as in the previous embodiments, the turbine shaft can have an extension long enough to reach the coupling with the removing brush, or said removing brush can be coupled to an extension shaft and/or by in-line couplings and/or cotters and/or gears. Therefore, the turbine can transfer movement to the connection element and subsequently to the removing brush.

The removing brush can act together with two in-line turbines, which supply potency at each side, both of them having the configuration previously described. Therefore, the flow from the pump bifurcates and generates rotation and thus potency delivery to both sides of the removing brush.

Accordingly, according to the previous description, the removing brush can operate driven by three different means: means No. 1, means No. 2 and means No. 3.

The removal generated by the brush does not let the removed organic pollution escape. Mainly, this is because the removal effect is complemented by suction or vacuuming, thus generating a simultaneous removal and suction effect.

One of the ways in order to not causing a secondary or environmental impact is by not destroying the organic pollution detached. Therefore, it is not recommended to use centrifugal suction elements, such as pumps. Nevertheless, a positive displacement pump or a vacuum pump can be used, but the components of said pumps will be always in contact with the suctioned fluid and therefore it will produce corrosion and subsequent wearing.

For this reason, a pump with no moving parts is used that functions by the Venturi principle. This effect manifests when a fluid is accelerated through a narrow section of a tube. In the narrowing point, pressure decreases and therefore it can suck up matter. This effect can be produced in two ways: by means of an incompressible or by means of a compressible fluid. Both forms use the same principle, but differ in the capacity of the equipments required to generate the low pressure effect.

Means No. 4 is the use of a pump with no moving parts, used with an incompressible fluid. The fluid is supplied by a pump that can be driven directly by an internal combustion engine or an electric motor, connected to en electric generator and/or to the electric network, or any other type of device that generates electric energy. This pump can be located on the surface, on a ship vessel or on fixed supports such as a floating raft and/or port. A submersible pump can also be used as driving force, which could pump water directly from the medium to the narrowing area. A hose is connected from the pump outlet to the nozzle of the pump with no moving parts, which generates the uncompressible fluid strangulation and thus the suction effect. The nozzle is designed with a gradual strangulation, which has an aperture angle of 24°, but said aperture angle can vary from 1° to 180°. The working diameter of the nozzle can vary according to the vacuum pressure required; however this magnitude can vary between 1 millimeter and 100 millimeters, depending on the circulating flow. This nozzle is connected to the body of the pump with no moving parts by means of a threaded element and/or fastening bolts and/or pressure clamps. All the former elements use an o-ring and/or gasket to prevent fluid leakage. The body of the pump with no moving parts has a suction duct wherein the connection with the suction hose from the removing device is located. This duct forms a certain angle between the projection of the nozzle axis and the projection of the suction duct axis. This angle can vary from 0° to 180°. Different bifurcating ducts can be coupled to this suction duct in such a way as to use many removing devices simultaneously. The connection between the suction duct and the bifurcating ducts can be made by threaded elements and/or fastening bolts and/or pressure clamps. All the former elements use an o-ring and/or gasket to prevent fluid leakage. These bifurcating ducts can be formed by 1, 2, 3 or multiple ducts with the goal of sucking through many suction channels. They can be distributed at different separation angles, from 0° to 180° and at different degrees with respect to the vertical, from 0° to 180°. The discharge of the pump with no moving parts, where the suctioned flow meets the propelled flow is connected with the discharge hose that is connected in turn with the storage and filtering device. As mentioned before, the pump with no moving parts operates submerged, but at a depth not larger than one meter, but this device can be operated on the surface at the vessel level.

Means No. 5 is the use of a pump with no moving parts, used with a compressible fluid. The fluid is supplied by a compressor that can be driven directly by an internal combustion engine or an electric motor connected to en electric generator and/or to the electric network, or any other type of device that generates electric energy. This compressor can be located on the surface, on a ship vessel or on fixed supports such as a floating raft and/or port. A hose is connected from the compressor outlet to the nozzle of the pump with no moving parts, which generates the compressible fluid strangulation and thus the suction effect. The nozzle is designed with a gradual strangulation, which has an aperture angle of 24°, but said aperture angle can vary from 1° to 180°.

The working diameter of the nozzle can vary according to the vacuum pressure required; however this magnitude can vary between 1 millimeter and 100 millimeters, depending on the circulating flow. This nozzle is connected to the body of the pump with no moving parts by means of a threaded element and/or fastening bolts and/or pressure clamps. All the former elements use an o-ring and/or gasket to prevent fluid leakage. The body of the pump with no moving parts has a suction duct wherein the connection with the suction hose from the removing device is located.

This duct forms a certain angle between the projection of the nozzle axis and the projection of the suction duct axis. This angle can vary from 0° to 180°. Different bifurcating ducts can be coupled to this suction duct in such a way as to use many removing devices simultaneously. The connection between the suction duct and the bifurcating ducts can be made by threaded elements and/or fastening bolts and/or pressure clamps. All the former elements use an o-ring and/or gasket to prevent fluid leakage. These bifurcating ducts can be formed by 1, 2, 3 or multiple ducts with the goal of sucking through many suction channels. They can be distributed at different separation angles, from 0° to 180° and at different degrees with respect to the vertical, from 0° to 180°. The discharge of the pump with no moving parts, where the suctioned flow meets the propelled flow is connected with the discharge hose that is connected in turn with the storage and filtering device.

It is worth mentioning that in means No. 4 and No. 5, these devices must be located at a depth not larger than 1 meter, in such a way as to remove organic pollution to the filtering vessel. These devices can also be located on the surface, but the convenience of performing the operation in this way must be experimentally assessed.

Means No. 6 is the use of air produced by a compressor, which can be driven by an internal combustion engine or an electric motor, with electric energy obtained from a generator or from the network, or from any other device that generates electric energy. The injected air generates a drag suction effect. Air is directly injected from a compressor to an air nozzle, which is located at the same depth of the removing device. Air injection at certain depth makes water pressure to push air bubbles up to the surface. The higher the depth the larger the pressure exerted over air bubbles and therefore the higher the ascending speed of the bubble and the larger the drag suction effect. Therefore, a discharge hose is connected directly from the compressor to an air nozzle located at the same depth of the removing device. The injected air is pushed by water to ascend at a certain speed, which generates the drag suction effect.

Al the produced suction is directly discharged into a storage and filtering device. This device comprises a vessel that can have many different forms, such as circular and/or squared and/or rectangular and/or regular and/or not regular, said vessel having a filtering system within. This vessel can be located either on a fixed place such as a dock or port or on a ship vessel or floating raft. A filtering system is inserted inside the vessel, said filtering system comprising screens with certain granulometry, which are concentrically arranged. The fluid impacts on a first stage, which is a larger granulometry screen and then impacts on a lower granulometry screen and subsequently so; therefore it is possible to use multiple filtering stages according to the necessity of minimizing the amount of particles evacuated to the medium wherein cleaning is being carried out. These stages comprise screens, as mentioned before. These screens are located inside a basket with overflow, i.e. it is not only a filtering bottom, but a filtering structure, i.e. a filtering body. It is constructed in this way as to continue filtering through the remaining faces or overflows of the basket when the bottom is obstructed by organic pollution.

These baskets are located concentrically and consecutively between them, which improves filtration and therefore the evacuation conditions of the suctioned effluent.

Therefore, the integral submarine maintenance system can be constructed in the following ways:
- System No. 1 comprising Means No. 1, No. 4 and storage and filtering device: the removing device is driven by electric energy. Suction is produced by means of a pump with no moving parts by an incompressible fluid from a pump with the features described before. In this way, the suctioned flow is discharged into the storage and filtering device.
- System No. 2 comprising Means No. 2, No. 4 and storage and filtering device: the removing device is driven by pneumatic energy. The air evacuated from the turbine comes out through a hose having a one-way valve that prevents water entrance into the space where the turbine is located. The exiting air can be used to complement the suction effect generated by the compressible-fluid pump with no moving parts. The suctioned flow is directed toward the storage and filtering device.
- System No. 3 comprising Means No. 3, No. 4 and storage and filtering device: the removing device is driven by hydraulic energy. Water evacuated from the turbine exit directly into the aquatic environment. Suction is generated by an incompressible-fluid pump with no moving parts. The discharge is directed toward the storage and filtering device.
- System No. 4 comprising Means No. 1, No. 5 and storage and filtering device: the removing device is driven by electric energy. Suction is produced by means of a pump with no moving parts by a compressible fluid from a compressor with the features described before. In this way, the suctioned flow is discharged into the storage and filtering device.
- System No. 5 comprising Means No. 2, No. 5 and storage and filtering device: the removing device is driven by pneumatic energy. Suction is produced by means of a pump with no moving parts by a compressible fluid from a compressor. In this way, the suctioned flow is discharged into the storage and filtering device.
- System No. 6 comprising Means No. 3, No. 5 and storage and filtering device: the removing device is driven by hydraulic energy. Suction is produced by means of a pump with no moving parts by an incompressible fluid from a pump. In this way, the suctioned flow is discharged into the storage and filtering device.
- System No. 7 comprising Means No. 1, No. 6 and storage and filtering device: the removing device is driven by electric energy. Suction is generated by air drag, said air being obtained from a compressor. In this way, the suctioned flow is discharged into the storage and filtering device.
- System No. 8 comprising Means No. 2, No. 6 and storage and filtering device: the removing device is air-driven. The air comes from the surface and bifurcates. The first channel feeds the turbine of the removing device. The second channel directly feeds suction. Each channel has a flow regulating valve. Air that is evacuated from the air turbine passes through a hose to the suction hose of the removing device in such a way as to recover all the air injected into the depths. Air evacuated from the turbine passes through a one-way valve in such a way as to prevent water entrance into the turbine when there is no air flow. Therefore, the bifurcated flow is brought together again, thus generating the drag suction. In this way, the suctioned flow is discharged into the storage and filtering device.
- System No. 9 comprising Means No. 3, No. 6 and storage and filtering device: the removing device is driven by hydraulic energy. Water is provided by a pump and suction is produced by air drag in the depths. In this way, the suctioned flow is discharged into the storage and filtering device.

The integral submarine maintenance device is operated by a qualified diver, who operates the removing device underwater. Depending on the geometric configurations and the type of organic pollution, according to that set forth before, the diver can change brushes in such a way as to adequate the operation to produce a better cleaning efficiency. However, the integral submarine maintenance system can be automatized depending on the configurations and geometric distributions of the submerged culture systems and/or structures, ships, and equipments, using remote-controlled movement systems, automatic rising systems and/or submarine robots that could serve to make submarine cleaning independent. The removing device can also be connected to other removing device or with multiple removing device in order to generate the surface to be cleaned, e.g. circular and/or rectangular and/or squared and/or regular and/or not regular. The removing devices can also be connected in different levels. A removing device will be formed by one level, therefore a staged removal is generated in this way, i.e. a detachment level is followed by a polishing level and/or a secondary cleaning level and subsequently so with multiple levels. Suction can be connected either in the same level (removing device) or between two levels, in order to capture more organic pollution.

### Brief description of the drawings

In the following section, figures are listed and described. Drawings are made to scale, and the represented dimensions can be representative or not representative of the present invention. Moreover, it is specified that the drawing's dimensions presented are not fixed, and therefore they can take different magnitudes according to the applicability convenience of the invention, as well as the forms taken by it, whether rectangular, curved, not regular, regular or squared, according to the following description.

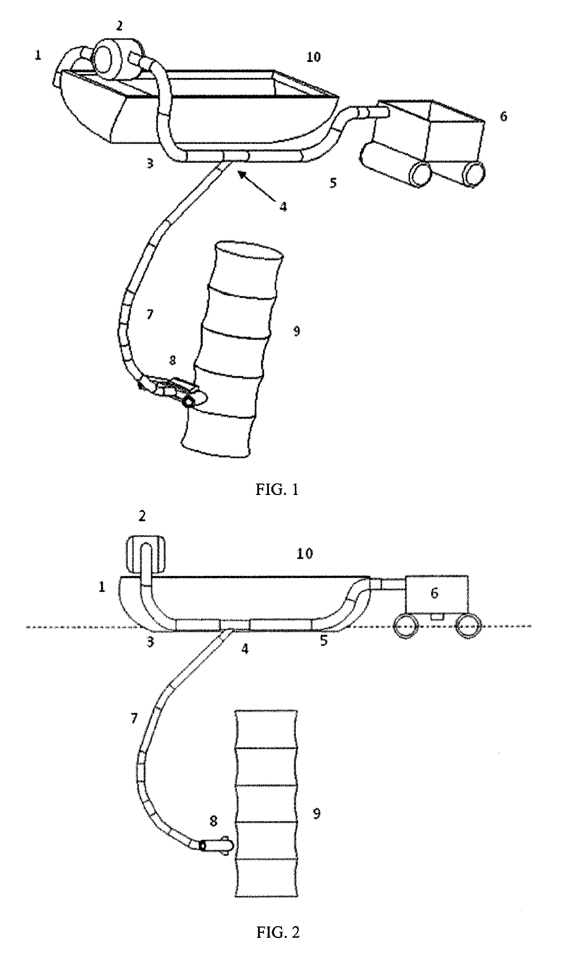

Figure No. 1: a representative scheme of the integral submarine maintenance system is presented, where the main parts are numbered as follows:
   1. Suction hose of the pump.
   2. Pump.
   3. Discharge hose of the pump.
   4. Pump with no moving parts, suctioning device.
   5. Discharge hose from the pump with no moving parts into the storage and filtering device.
   6. Storage and filtering device.
   7. Suction hose of the suctioning device connected to the removing device.
   8. Removing device.
   9. System to be cleaned (Pearl-Nets, Lantern, etc.).
   10. Ship.
Figure No. 2: A front view representative of the integral submarine maintenance system is shown, wherein the levels at which the system elements are located can be appreciated.
Figure No. 3: removing device, wherein its main parts are numbered as follows:
   1. Connection to the suction hose of the suctioning device.
   2. Driving elements of the removing device.
   3. Removing brush.
Figure No. 4: suctioning device, wherein its main parts are numbered as follows:
   1. Fluid strangulating nozzle, connection to the discharge hose of the pump.
   2. Suction channel, which in this case can be appreciated with a bifurcation for operating two removing devices.
   3. Receptor of the nozzle and suction channel. This is connected by the discharge hose to the storage and filtering device.

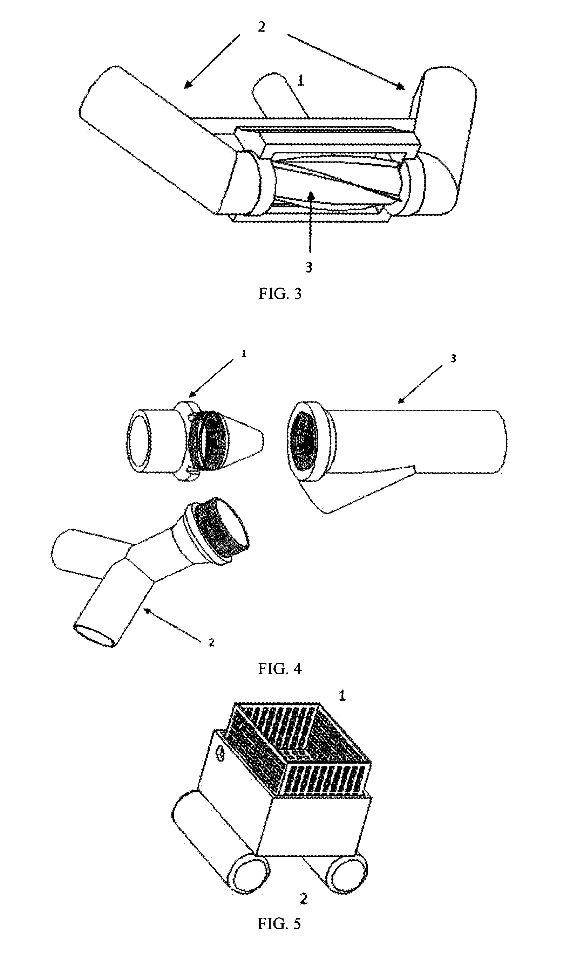

Figure No. 5: storage and filtering device, in this case the device is located on a floating structure, where its main parts are numbered as follows:
   1. Floating basket, which in this case has one stage.
   2. Floating basket vessel.

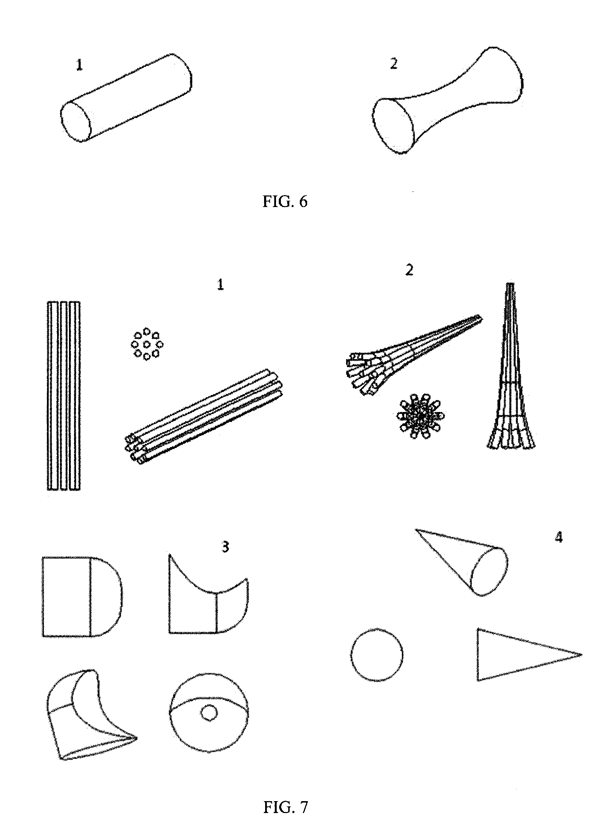

Figure No. 6: schematic representation of different embodiments of the removing brush:
   1. Straight circular brush, to be applied to flat surfaces.
   2. Cylindrical circular brush, to be applied to curved surfaces.
Figure No. 7: schematic representation of different types of removing materials that can be used in the removing brush:
   1. Bristles of some kind of material.
   2. Fibers of some kind of material.
   3. Wedged grinders of some kind of material.
   4. Points of some kind of material.

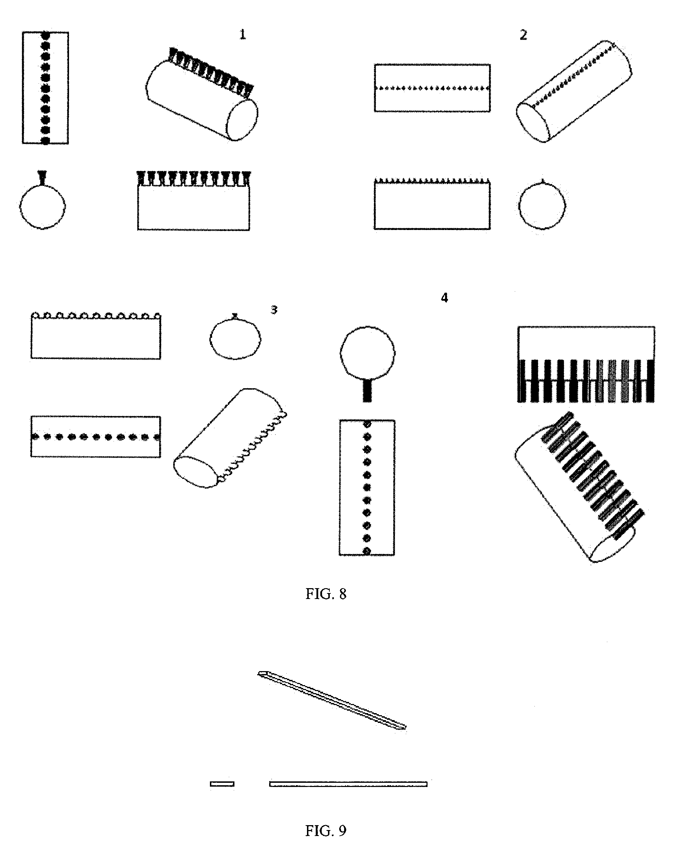

Figure No. 8: schematic representation of possible distributions of the removing materials on the removing brush:
   1. Longitudinally arranged fibers along a line on the removing brush.
   2. Longitudinally arranged points along a line on the removing brush.
   3. Longitudinally arranged grinders along a line on the removing brush.
   4. Longitudinally arranged bristles along a line on the removing brush.
Figure No. 9: schematic representation of the plates that can be also used as removing materials.

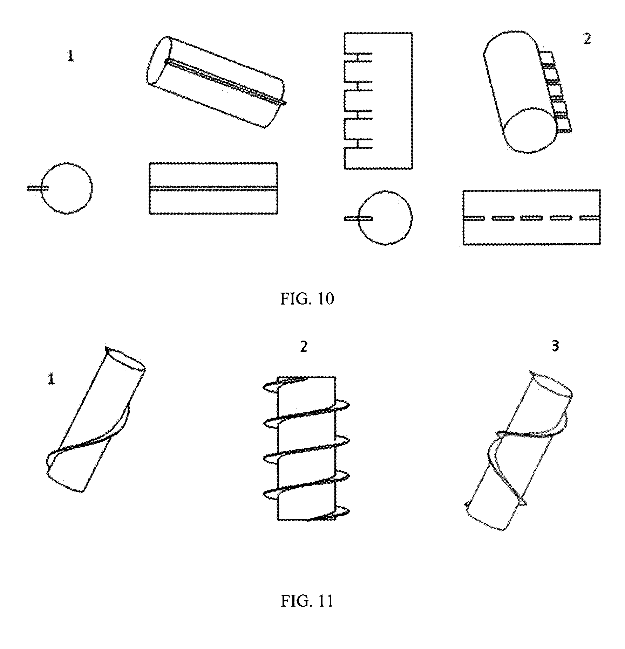

Figure No. 10: schematic representation of the plates arranged on a line across the axis in the following arrangements:
   1. Continuous.
   2. Discontinuous.
Figure No. 11: schematic representation of a type of removing material arranged along the brush in the following arrangement:
   1. One-sense turn helix, with a step having a magnitude equal to the length of the brush.
   2. One-sense turn helix, with a step having a magnitude lower than the length of the brush.
   3. Convergent-sense turn helix, with a step having a magnitude lower than the length of the brush.

## Claims

1. A comprehensive submarine maintenance system, which permits the cleaning of organic pollution adhered to the substrate provided by submerged cultivation systems and/or structures, ships, and submerged equipment both in sea waters and fresh waters, **CHARACTERIZED in that** it accomplishes the simultaneous removing, suctioning, and filtering effect, generated by a removing device interconnected to a suctioning device while the latter is in turn connected to an accumulation and filtering device.

2. A comprehensive submarine maintenance system, in accordance to claim 1, **CHARACTERIZED in that** the comprehensive submarine maintenance system is constituted by a removing device, a suctioning device, and an accumulation and filtering device.

3. A comprehensive submarine maintenance system, in accordance to claim 1, **CHARACTERIZED in that** the removal carried out by the removing device is performed by a removing brush, which, because of the removing device configuration, facilitates its exchange.

4. A comprehensive submarine maintenance system, in accordance to claim 1, **CHARACTERIZED in that** because of the interchangeability of the removing brush, it may take the shape of the surface to be cleaned, whether flat, not flat, circular, not circular, regular, irregular, that is, provoking a universal adaptability.

5. A comprehensive submarine maintenance system, in accordance to claim 1, **CHARACTERIZED in that** the removal materials inside the geometric configuration of the removing brush may be distributed in the following manner:
• For the fibers and/or bristles and/or points and/or grinders: they may be distributed radially along the brush in a continuous and/or discontinuous line. This line may be a simple radial line, that is, a line along the brush, and/or a multiple radial line, that is, multiple lines at diverse angles. The longitudinal and angle spacings are established experimentally, following the different organic pollution types and/or rotating speed and/or torque. In addition, the preceding may be distributed helicoidally along the brush, be it with a simple helicoid or several helicoids at different angles and diverse helicoid pitches, where these pitches may be as long as the brush itself or may vary with its shape.
• For sheets radially placed along the brush: they may be distributed in a simple radial line, that is, a continuous and/or discontinuous line along the brush, and/or a multiple radial line, that is, multiple lines at diverse angles. The longitudinal and angle spacings of the sheets are established experimentally, following the different organic pollution types and/or rotating speed and/or torque. In addition, these sheets may be distributed helicoidally along the brush, be it with a simple helicoid or several helicoids at different angles and diverse helicoid pitches, where these pitches may be as long as the brush itself or may vary with its shape.

6. A comprehensive submarine maintenance system, in accordance to claim 1, **CHARACTERIZED in that,** in addition to the diverse removal materials in the geometric configuration of the removing brush, such as fibers and/or bristles and/or points and/or grinders, they may be combined with the sheets and the latter may also be combined among them, placed radially following the required conditions, both in a simple manner and also combined continuously and discontinuously, at different angles and longitudinal and radial spacings among them.

7. A comprehensive submarine maintenance system, in accordance to claim 1, **CHARACTERIZED in that**, in addition, in the case of helicoidal distribution of fibers and/or bristles and/or points and/or grinders and/or sheets, the helicoid may start from the extreme right end and/or the extreme left end of the removing brush, generating a movement direction. The latter may also start at both ends with the same and/or a different pitch, generating a convergence of helicoids, or else, the same may start at the removing brush center, generating a divergence of helicoids. Said helicoids, whether simple in one direction, convergent, or divergent, may have pitches whose magnitudes follow brush sections, generating several helicoid turns, and only one turn when the pitch has the same magnitude as the removing brush length.

8. A comprehensive submarine maintenance system, in accordance to claim 1, **CHARACTERIZED in that** the motor element that drives the removing brush, may be produced by:
• Electric energy, using an electric motor, obtained from batteries and/or an electric generator and/or the electrical energy grid and/or any type of equipment that generates it. The electric energy generators may be located both above and under water.
• Pneumatic energy, using an air turbine, obtained by an air compressor, actuated by a motor that, in turn, may operate with electric energy or an internal combustion engine. Should electric energy be used, it may be supplied by a generator and/or directly from the electrical energy grid and/or any type of equipment that generates it. The electric energy generators may be located both above and under water.
• Hydraulic energy, using a water turbine, obtained from a pump, actuated by a motor that, in turn, may operate with electric energy or an internal combustion engine. Should electric energy be used, it may be supplied by a generator and/or directly from the electrical energy grid and/or any type of equipment that generates it. The electric energy generators may be located both above and under water.

9. A comprehensive submarine maintenance system, in accordance to claims 1 and 8, **CHARACTERIZED in that** the removing brush may operate jointly with two motor elements in line, powering it from both sides. It is interesting to underline that the motor elements must possess the same technical specifications, so that there is no rotation difference between both brush sides.

10. A comprehensive submarine maintenance system, in accordance to claims 1 and 8, **CHARACTERIZED in that** it is possible to use one or several removal floors, that is, to have two in line motor elements that actuate a brush at its two sides or two or multiple motor elements in parallel actuating two or multiple brushes, separating the removal process into several removal stages or floors, depending on the needs of said process.

11. A comprehensive submarine maintenance system, in accordance to claims 1 and 2, **CHARACTERIZED in that** the organic pollution falling from submerged cultivation systems and/or structures and/or ships and/or submerged equipment, is not returned to the aquatic environment, because the removing device operates with a simultaneous removal and suction effect.

12. A comprehensive submarine maintenance system, in accordance to claims 1 and 11, **CHARACTERIZED in that** the suction effect is generated by fluids, not by mechanical rotating elements, contributing to environmental impact mitigation, because it does not destroy the organic pollution falling from submerged cultivation systems and/or structures and/or ships and/or submerged equipment.

13. A comprehensive submarine maintenance system, in accordance to claims 1 and 12, **CHARACTERIZED in that** the suction effect may be generated with:
• Pneumatic energy, generating a vacuum by means of the fluid choking or venturi effect, obtained from a compressor, driven by a motor that, in turn, may operate with electric energy or an internal combustion engine. If electric energy is used, it may be supplied by a generator and/or directly by the electrical energy grid and/or any type of equipment that generates it.
• Pneumatic energy, generating a vacuum by means of the air lift effect, obtained from a compressor, driven by a motor that, in turn, may operate with electric energy or an internal combustion engine. If electric energy is used, it may be supplied by a generator and/or directly by the electrical energy grid and/or any type of equipment that generates it.
• Hydraulic energy, generating a vacuum by means of the fluid choking or venturi effect, obtained from a pump, driven by a motor that, in turn, may operate with electric energy or an internal combustion engine. If electric energy is used, it may be supplied by a generator and/or directly by the electrical energy grid and/or any type of equipment that generates it.

14. A comprehensive submarine maintenance system, in accordance to claims 1 and 13, **CHARACTERIZED in that** when using a pump having no moving parts and pneumatic and/or hydraulic energy, it may be located at the surface or under water and the equipment that generates the motivating fluid, compressible or incompressible, may be located both at the surface and under water.

15. A comprehensive submarine maintenance system, in accordance to claims 1 and 14, **CHARACTERIZED in that** the discharge from the pump having no moving parts, where the suctioned flow volume and the impelled flow volume come together, is connected to the discharge hose connected to the accumulation and filtering device.

16. A comprehensive submarine maintenance system, in accordance to claims 1 and 13, **CHARACTERIZED in that** air is used to generate the lift suction effect, which is injected at the removing device operation depth.

17. A comprehensive submarine maintenance system, in accordance to claims 1 and 2, **CHARACTERIZED in that** the suction device discharge is taken directly to an accumulation and filtering container.

18. A comprehensive submarine maintenance system, in accordance to claims 1 and 17, **CHARACTERIZED in that** the inner part of the receptacle holds a system of concentric and successive filtering sieves, adapted or not adapted to the receptacle shape and the filtering sieves have a cell or granulometric separation. Since they are placed in succession, they may be ordered in an increasing or decreasing manner and that the filtering sieves are organized in a basket structure, in order to increase their accumulation and filtering efficiency and **in that** the material the filtering sieves are made of may be plastic and/or metal and/or rubber and/or polymers.

19. A comprehensive submarine maintenance system, in accordance to claims 1 and 17, **CHARACTERIZED in that**, the filtering stages and sieve type vary with the organic pollution type, which may consist of one or several stages and the fluid, once it goes through the last filtering sieve, goes directly into the aquatic medium.

20. A comprehensive submarine maintenance system, in accordance to claims 1 and 17, **CHARACTERIZED in that** the accumulation and filtering device may be placed on a ship and/or a fixed land location and/or a floating station and the accumulation and filtering device may be moved around with a sliding element or it may remain fixed at a given location.

21. A comprehensive submarine maintenance system, which permits the cleaning of organic pollution adhered to the substrate provided by submerged cultivation systems and/or structures, ships, and submerged equipment both in sea waters and fresh waters, **CHARACTERIZED in that** it allows the removal of organic pollution from submerged cultivation systems and/or structures and/or ships and/or submerged equipment both in sea waters and fresh waters, increasing overall operation efficiency, mitigating the environmental impact, and minimizing operation times.

22. A comprehensive submarine maintenance system, in accordance to claim 1, **CHARACTERIZED in that** it requires the simultaneous occurrence of three processes. A removal process, a suction process, and an accumulation and filtering process.

23. A comprehensive submarine maintenance system, in accordance to claim 1, **CHARACTERIZED in that** the removed organic material may be dumped at an authorized sanitary landfill or reutilized in the following byproducts:
• Compost: agricultural fertilizer.
• Biogas: fuel.
• Pellets: food for aquaculture and/or cattle raising and/or other applications.
• Cosmetic uses: development of beauty care products.
• Medical uses: development of health products.
